# EUROPEAN PATENT SPECIFICATION

(11) **EP 4 437 253 B1**
(45) Date of publication and mention of the grant of the patent: **15.04.2026**
(21) Application number: 22822214.7
(22) Date of filing: 15.11.2022
(51) Int. Cl.: F16J 15/16, F16J 15/3212, F16J 15/3236

(54) **SEALING SYSTEM FOR MECHANICAL MEMBERS**
DICHTUNGSSYSTEM FÜR MECHANISCHE BAUTEILE
SYSTÈME D'ÉTANCHÉITÉ POUR ÉLÉMENTS MÉCANIQUES

(30) Priority: 23.11.2021 IT 202100029588
(43) Date of publication of application: 02.10.2024
(73) Proprietor: Development Service S.r.l., 21052 Busto Arsizio, Varese (IT)
(72) Inventor: MARCANTE, Marco, 21015 Lonate Pozzolo, VARESE (IT)
(74) Representative: Chimini, Francesco
(86) International application number: PCT/IB2022/060976
(87) International publication number: WO 2023/094932

(56) References cited:
- EP-A1- 3 343 076
- CN-A- 109 681 669
- CN-A- 111 412 302
- CN-A- 113 202 945
- US-A- 3 999 745

## Description

The present invention relates generally to seal systems used in mechanical members for containing liquid or gaseous leaks, both within components and to the atmosphere.

Many seal systems used today in the industrial sector use a soft component, mainly thermoplastic, that is loaded with different compounds and installed in a respective seat. The pressure generated by the gas or process liquid promotes the expansion of the soft component and therefore facilitates the contact of the seal itself, thereby improving the performance thereof.

However, these types of seal systems currently used in industry do not always minimize the leaks between pressurized components, especially when metal components are involved. The cause of the sub-optimal behavior of current seal systems may be attributed to several factors, for example:
- the pressure of the working fluid does not sufficiently deform the soft sealing element thereby preventing perfect contact with the surfaces;
- the geometric tolerances of the metal components prevent perfect contact between the soft sealing element and the seat thereof;
- the roughness of metal surfaces may cause leaks, especially in worn components. US3999745AA discloses a snubber having a seal assembly in which a seal having a generally U-shaped cross section encircling a reciprocating rod is engaged with a separate integral wedge element in such a way that radial loads are applied so as to force the outer lip of the seal outwardly and the inner lip of the seal inwardly.

An object of the present invention is to provide a seal system capable of overcoming the aforementioned limits with reference to current seal systems and thus of minimizing, if not canceling, fluid leaks, especially where a particular sealing performance is required.

Another object of the invention is to propose a seal system capable of operating effectively under any condition and with any type of fluid and which is also immune from dirt carried by the fluid.

Another object of the invention is to provide a seal system that may be used in multiple devices for containing, intercepting and regulating the flow of a fluid, without requiring a significant redesign of such devices.

These purposes are achieved with a seal system according to claim 1, with a seal assembly according to claim 6 and with a device according to claim 7.

The dependent claims describe preferred or advantageous embodiments of the system and of the devices according to the invention.

The features and advantages of the invention will become apparent from the description below of the preferred embodiments thereof, given by way of non-limiting example, with reference to the attached figures, wherein:
- Figure 1 is a cross-section of the seal assembly according to the invention;
- Figure 2 is an axial section of a ball valve wherein positions for the possible installation of a seal assembly according to the invention are indicated; and
- Figure 3 is an axial section of a ball valve portion at the seal assembly between a ball seat and a flange of the valve body.

In said drawings, the reference number 1 indicates a seal system according to the invention.

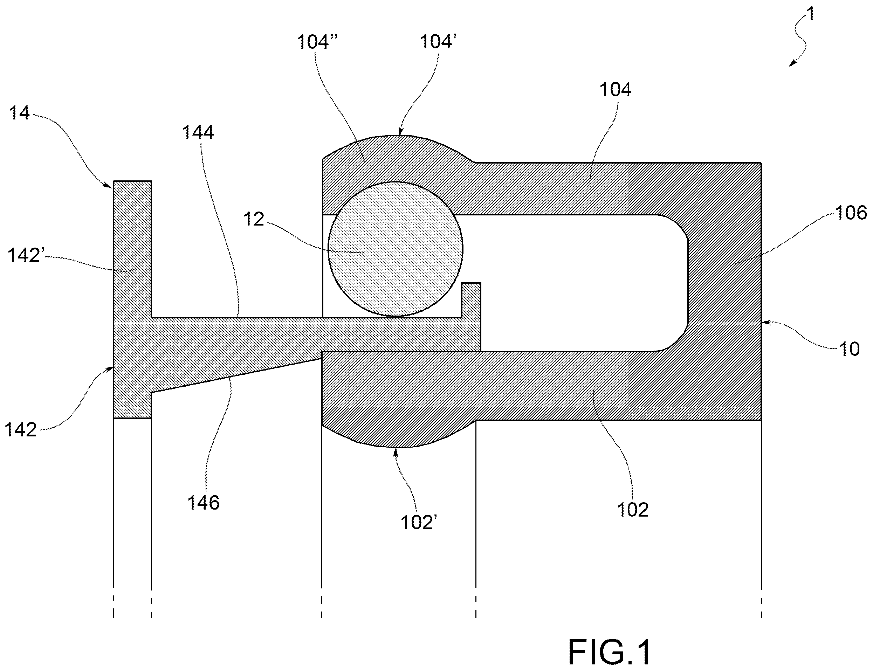

The seal system 1, whereof Figure 1 represents the cross section, has a toroidal shape, i.e., it consists of elements having an annular shape. In the following description, the terms "axial" and "radial" will be used with reference to parallel and perpendicular directions respectively, to the axis of the seal system 1 passing through the center thereof and perpendicular to planes wherein the annular elements of the seal system lie.

In a general embodiment, the seal system 1 comprises a lip seal 10, a toroidal tensioning element 12 and an annular thruster element 14.

The lip seal 10 comprises an inner lip portion 102 and an outer lip portion 104. The two inner lip portion 102 and outer lip portion 104 are therefore the two portions of the gasket intended to achieve the sealing effect when the gasket is inserted between two surfaces.

For example, the two lip portions 102, 104 are substantially parallel to each other.

The two lip portions 102, 104 are connected to each other by an intermediate connection portion 106.

The two lip portions 102, 104 and the intermediate portion 106 confer an overall "C" shape to the lip seal 10.

In one embodiment, the inner lip portion 102 and outer lip portion 104 form, on the respective radially outer sides, convex distal surfaces 102', 104' suitable for making respective points of contact with respective surfaces among which the lip seal is inserted in order to prevent the passage of a fluid.

The toroidal tensioning element 12 is positioned between the inner lip portion 102 and the outer lip portion 104 in order to keep the lip seal 10 under tension.

In other words, the tensioning member 12 is mainly used to maintain a controlled pressure in the lip seal, for example to compensate for wearing of the lips, changes in the volume or stiffness of the elastomer whereof the seal is constituted, as well as the effect of temperature or atmospheric changes.

For example, the toroidal tensioning element 12 is positioned between the free ends of the lip portions 102, 104.

In one embodiment, the toroidal tensioning element 12 is made with a helical spring.

In one embodiment, the toroidal tensioning element 12 has, in section, a maximum diameter that is smaller than the distance between the two lip portions 102, 104.

In one embodiment, a distal end portion 104" of one of the inner lip portion 102 and the outer lip portion 104 has a concave shape and the toroidal tensioning element 12 is partially accommodated by shape coupling in such distal end portion.

The annular thruster element 14 performs the function of further pre-loading the lip seal 10 such as to increase the specific pressure of the lip portions 102, 104 against the respective surfaces.

For this purpose, the annular thruster element 14 is partially inserted into the lip seal 10 between one of the inner lip portion 102 and outer lip portion 104 and the toroidal tensioning element 12.

The annular thruster element 14 forms, or is provided with, an outer end portion 142 axially protruding from the lip seal 10 in order to be engageable so as to cause an axial translation of the annular thruster element 14 towards the interior of the lip seal 10, i.e., towards the intermediate connection portion 106.

The annular thruster element 14 has a wedge shape such that an axial translation of the annular thruster element 14 causes radial divarication of the lip seal.

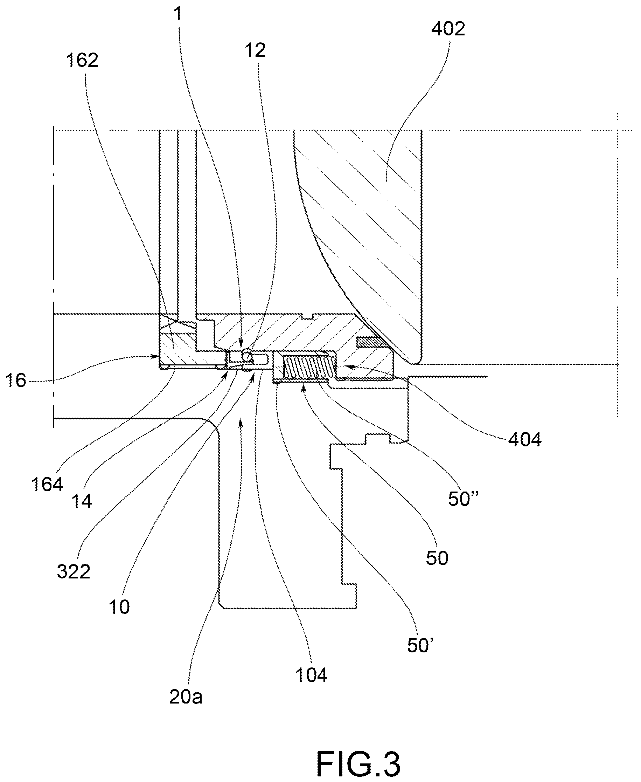

In Figures 1 and 3, the annular thruster element 14 is inserted between the toroidal tensioning element 12 and the inner lip portion 102. In this case, the axial translation of the annular thruster element 14 also results in radial enlargement of the toroidal tensioning element 12, and therefore in an increase in the load thereof that transfers to the lip seal 10.

In one embodiment, the annular thruster element 14 forms a substantially flat radially external wall 144, on which, for example, the toroidal tensioning element 12 rests, and an at least partially inclined radially internal wall 146, which internal wall 146 confers a wedge-shaped structure to the annular thruster element 14.

In one embodiment, the outer end portion 142 of the annular thruster element 14 forms a flat head 142' substantially perpendicular to the axis of translation of the annular thruster element 14. Said flat head 142' acts as an abutment element for a register member 16 that is operable to cause a controlled translation of the annular thruster element 14.

Therefore, a seal assembly 20 comprising the seal system 1 described above and the register member 16 that acts upon the annular thruster element 14 is also an object of the invention.

According to another general aspect thereof, the invention relates to a device for containing a fluid or for intercepting or regulating a flow of a fluid, comprising a first surface and a second surface, and a seal assembly 20 as described above, wherein the lip seal 10 is interposed between said first and second surfaces to prevent the passage of the fluid therebetween.

In one embodiment, the register member 16 is formed by a threaded register ring screwed into a threaded ring seat.

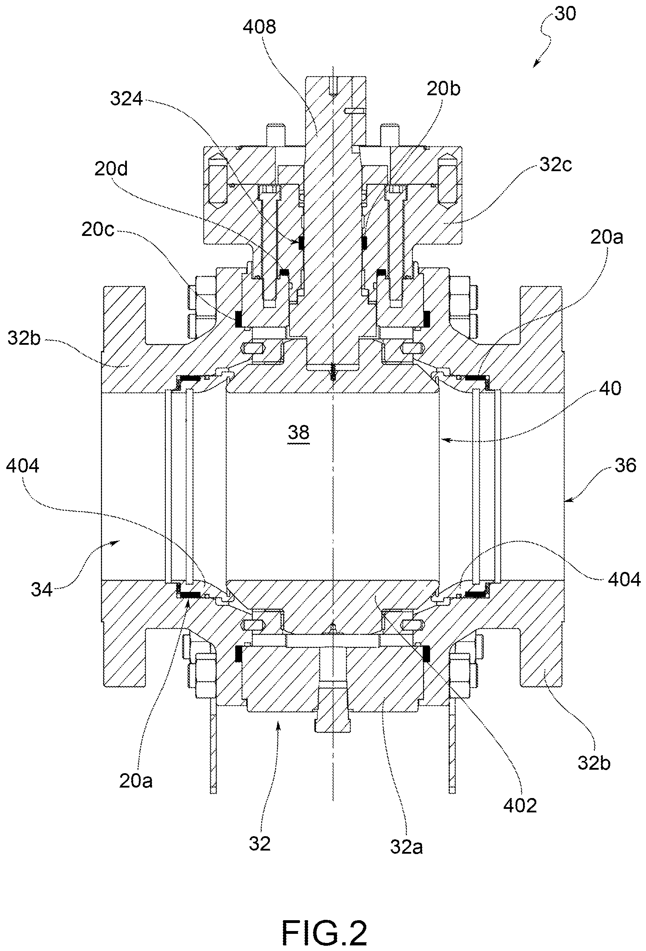

With reference to Figures 2 and 3, an example of the application of the seal assembly 20 within a fluid flow interception device 30, such as a valve, will now be described.

The interception device 30 comprises a device body 32, which forms a fluid inlet conduit 34, a fluid outlet conduit 36 and, between the inlet conduit and the outlet conduit, a flow interception chamber 38.

A flow interception group 40 is sealingly housed in the flow interception chamber 38. Said flow interception group 40 is operable to intercept the passage of fluid flow from the inlet conduit 34 to the outlet conduit 36.

At least one seal assembly 20 is installed in the device body 32 with the lip seal 10 interposed between a surface of the interception group 40 and a surface of the device body 32.

In one embodiment, the register member 16 is formed by a threaded register ring 162 screwed into a threaded ring seat 164 obtained in the device body 32.

For example, the interception group 40 comprises a movable shutter member 402 and a pair of annular seats 404 that sealingly support the movable shutter member 402. For example, the movable shutter 402 is a spherical shutter rotatable with respect to the annular seats 404.

A pair of seat-body seal assemblies 20a is installed in the device body 32, each having a lip seal 10 interposed between a respective annular seat 404 and a first surface 322 of the device body 32.

In one embodiment, the interception group 40 is rotatably operable by means of a maneuvering stem 408 protruding from the flow interception chamber 38 such as to be pivotally engaged by a control handle - not shown.

At least one stem-body seal assembly 20b is interposed between a surface of the maneuvering stem 408 and a second surface 324 of the device body 32.

In one embodiment, the device body 32 comprises a central portion 32a, two end flanges 32b connected to the central portion 32a, and a cover 32c fastened to the central portion 32a for supporting and guiding a maneuvering member of the interception group, for example the maneuvering stem 408.

As schematically shown in Figure 2, at least one seal assembly 20c, 20d is respectively interposed between each end flange 32b and the central body 32a and/or between the cover 32c and the central body 32a.

With reference to Figure 3, in an embodiment wherein the interception group 40 comprises a ball shutter 402, each annular seat 404 of the pair of annular seats is kept elastically in contact with the spherical shutter by means of a seat-press ring 50.

The seat-press ring 50 is positioned in the device body 32 so as to act as an axial abutment element for the seat-body seal system 20a on the opposite side with respect to the register ring 162.

Thus, the seal system 1 is axially retained in the device body between the register ring 162 and the seat-press ring 50.

For example, the seat-press ring 50 comprises a ring body 50' and elastic means, for example a plurality of springs 50", housed in the ring body such as to act in compression against the spherical shutter 402.

The register ring may be provided with engagement means, for example a hexagonal inner surface, suitable for being engaged by a tool for the controlled translation thereof in the ring seat.

It should be noted that in at least some embodiments, while the lip seal is made of a soft material, e.g., an elastomer, the toroidal thruster member 14 may be made of a metallic material.

Therefore, the combination of a soft sealing element realized using a lip seal and a thruster element made of a rigid material that confers a preload to the soft element which is adjustable by means of the register member, which allows the specific pressure of the lip seal to be increased against the sealing seat, greatly increasing the seal of the assembly.

The proposed solution allows to minimize leaks without requiring low roughness surfaces in some cases difficult to obtain. Furthermore, the proposed seal system allows to compensate for the geometric tolerances of the circularity and concentricity of the metal seal surfaces, since the lip seal is capable of adapting to seal surfaces.

The proposed seal assembly is advantageously usable in cryogenic applications. The devices used in these applications are subject to high losses due to the different thermal expansion of the lip seal compared to that of the metal parts. Losses occur in particular due to the loss of contact of the outer lip portion with the respective surface of the device body due to the greater thermal expansion of the thermoplastic element.

With the proposed seal assembly, the preload supplied by the wedge-shaped register member during mounting step of the device ensures an optimal seal over time, minimizing the effect of the thermal contraction of the lip seal in the seat thereof, since the seal is constrained in position by the register member.

It should be noted that the seal assembly according to the invention, described above and represented in the drawings, by way of a non-limiting example, applied to a ball valve, may be installed in all types of devices for the interception of a fluid and in general in all applications that require minimal leakage.

Furthermore, since the proposed seal assembly does not require the redesigning of the components of the device in which it is installed, the assembly may also be mounted in devices that are already in use, replacing traditional seal systems.

To the embodiments of the system, assembly and device according to the invention, a person skilled in the art may, in order to meet contingent needs, make changes, adaptations, and replacements of elements with functionally equivalent ones without departing from the scope of the following claims. Each of the features described as belonging to a possible embodiment may be obtained independently of the other described embodiments.

## Claims

1. A seal system (1), comprising:
- a lip seal (10) comprising an inner lip portion (102) and an outer lip portion (104);
- a toroidal tensioning element (12) positioned between the inner lip portion (102) and the outer lip portion (104) for keeping the lip seal (10) under tension;
- an annular thruster element (14) partially inserted into the lip seal (10) between said inner lip portion (102) and the toroidal tensioning element (12), the annular thruster element (14) forming an outer end portion (142) axially protruding from the lip seal (10) to be engageable so as to cause an axial translation of the annular thruster element (14) towards the inside of the lip seal (10), the annular thruster element (14) having a wedge shape so that said axial translation of the annular thruster element (14) causes a radial divarication of the lip seal (10),
**characterized in that** the axial translation of the annular thruster element (14) results in radial enlargement of the toroidal tensioning element (12), and therefore in an increase in the load that the toroidal tensioning element (12) transfers to the lip seal (10).

2. A seal system according to claim 1, wherein the toroidal tensioning element (12) is made with a helical spring.

3. A seal system according to claim 1 or 2, wherein a distal end portion (104") of one between the inner lip and outer lip portions (102, 104) has a concave shape, and wherein the toroidal tensioning element (12) is partially accommodated by shape coupling in said distal end portion (102", 104").

4. A seal system according to any one of the preceding claims, wherein the annular thruster element (14) forms a radially external wall (144) which is substantially flat, on which the toroidal tensioning element rests, and a radially internal wall (146) which is at least partially inclined.

5. A seal system according to any one of the preceding claims, wherein the inner and outer lip portions (102, 104) form, on the respective radially outer sides, convex distal surfaces (102', 104') suitable to make respective points of contact with respective seal surfaces.

6. A seal assembly (20) comprising a seal system (1) according to any one of the preceding claims and a register member (16) suitable to engage the outer end portion (142) of the annular thruster element (14), the register member (16) being operable to cause a controlled translation of the annular thruster element (14).

7. A device (30) for containing a fluid or for intercepting a fluid flow, comprising a first surface and a second surface and a seal assembly (20) according to claim 6 having the lip seal (10) interposed between said first and second surfaces to prevent the passage of the fluid therebetween.

8. A device according to the preceding claim, wherein the register member (16) is formed by a threaded register ring (162) screwed into a threaded ring seat (164).

9. An interception device (30) for intercepting the flow of a fluid, comprising:
- a device body (32) forming a fluid inlet conduit (34), a fluid outlet conduit (36) and, between the inlet conduit and the outlet conduit, a flow interception chamber (38);
- a flow interception group (40) sealingly housed in the flow interception chamber (38) and operable for intercepting the passage of the fluid flow from the inlet conduit (34) to the outlet conduit (36);
- at least one seal assembly (20) according to claim 6 having the lip seal (10) interposed between a surface of the interception group and a surface of the device body (32).

10. A device according to the preceding claim, wherein the register member (16) is formed by a threaded register ring (162) screwed into a threaded ring seat (164) obtained in the device body (32).

11. A device according to claim 9 or 10, wherein the interception group (40) comprises:
- a movable shutter member (402);
- a pair of annular seats (404) sealingly supporting the movable shutter member (402);
- a pair of seat-body seal assemblies, each having a lip seal (10) interposed between a respective annular seat (404) and a surface of the device body (32).

12. A device according to any one of claims 9-11, wherein the interception group (40) is rotatably operable by means of a maneuvering stem (408) protruding from the interception chamber so as to be rotatably engaged by a control handle, at least one body-stem seal assembly being interposed between a surface of the maneuvering stem (408) and a surface of the device body (32).

13. A device according to any one of claims 9-12, wherein the device body (32) comprises a central portion (32a), two end flanges (32b) connected to the central portion (32a), and a cover (32c) fastened to the central portion (32a) for supporting and guiding a maneuvering member of the interception group (40), wherein at least one seal assembly (20) is interposed between each end flange (32b) and the central body (32a) and/or between each end flange (32b) and the cover (32c) and/or between the cover (32c) and the central body (32a).

14. A device according to any one of claims 11-13, wherein the interception group (40) comprises a ball shutter (402) and wherein each annular seat (404) of the pair of annular seats (404) is kept elastically in contact with the ball shutter (402) by a seat-press ring (50), the seat-press ring (50) being positioned in the device body (32) so as to act as an axial abutment element for the body-seat seal system on the opposite side with respect to the register ring.

## Patentansprüche

1. Dichtungssystem (1), umfassend:
- eine Lippendichtung (10) umfassend einen inneren Lippenabschnitt (102) und einen äußeren Lippenabschnitt (104);
- ein toroidales Spannelement (12), das zwischen dem inneren Lippenabschnitt (102) und dem äußeren Lippenabschnitt (104) positioniert ist, um die Lippendichtung (10) unter Spannung zu halten;
- ein ringförmiges Schubelement (14), das teilweise in die Lippendichtung (10) zwischen dem inneren Lippenabschnitt (102) und dem toroidalen Spannelement (12) eingeführt wird, wobei das ringförmige Schubelement (14) einen äußeren Endabschnitt (142) bildet, der axial aus der Lippendichtung (10) vorsteht, um in Eingriff gebracht werden zu können, um eine axiale Verschiebung des ringförmigen Schubelements (14) zu dem Inneren der Lippendichtung (10) zu bewirken, wobei das ringförmige Schubelement (14) eine Keilgestalt aufweist, so dass die axiale Verschiebung des ringförmigen Schubelements (14) eine radiale Erweiterung der Lippendichtung (10) bewirkt,
**dadurch gekennzeichnet, dass** die axiale Verschiebung des ringförmigen Schubelements (14) zu einer radialen Vergrößerung des toroidalen Spannelements (12) führt und somit eine Erhöhung der Last, die das toroidale Spannelement (12) auf die Lippendichtung (10) überträgt.

2. Dichtungssystem nach Anspruch 1, wobei das toroidale Spannelement (12) mit einer Schraubenfeder ausgeführt wird.

3. Dichtungssystem nach Anspruch 1 oder 2, wobei ein distaler Endabschnitt (104") von einem zwischen dem inneren Lippenabschnitt und dem äußeren Lippenabschnitt (102, 104) eine konkave Gestalt aufweist, und wobei das toroidale Spannelement (12) durch Formschluss teilweise in dem distalen Endabschnitt (102", 104") aufgenommen wird.

4. Dichtungssystem nach einem der vorhergehenden Ansprüche, wobei das ringförmige Schubelement (14) eine radial äußere Wand (144) bildet, die im Wesentlichen flach ausgebildet ist, auf der das toroidale Spannelement aufliegt, und eine radial innere Wand (146), die mindestens teilweise geneigt ausgebildet ist.

5. Dichtungssystem nach einem der vorhergehenden Ansprüche, wobei die innere und die äußere Lippenabschnitte (102, 104) an den jeweiligen radial äußeren Seiten konvexe distale Flächen (102', 104') bilden, die geeignet sind, jeweilige Kontaktpunkte mit jeweiligen Dichtflächen zu schaffen.

6. Dichtungsanordnung (20), umfassend ein Dichtungssystem (1) nach einem der vorhergehenden Ansprüche und ein Einstellelement (16), das geeignet ist, den äußeren Endabschnitt (142) des ringförmigen Schubelements (14) in Eingriff zu setzen, wobei das Einstellelement (16) betätigt werden kann, um eine kontrollierte Verschiebung des ringförmigen Schubelements (14) zu bewirken.

7. Vorrichtung (30) zum Enthalten einer Flüssigkeit oder zum Abfangen eines Flüssigkeitsstroms, umfassend eine erste Oberfläche und eine zweite Oberfläche und eine Dichtungsanordnung (20) nach Anspruch 6 aufweisend die Lippendichtung (10), die zwischen der ersten und der zweiten Oberfläche angeordnet ist, um den Durchtritt der Flüssigkeit dazwischen zu verhindern.

8. Vorrichtung nach dem vorhergehenden Anspruch, wobei das Einstellelement (16) durch einen Gewindeeinstellring (162) gebildet wird, der in einen Gewinderingsitz (164) eingeschraubt wird.

9. Abfangvorrichtung (30) zum Abfangen des Stroms einer Flüssigkeit, umfassend:
- einen Vorrichtungskörper (32), der eine Flüssigkeitseinlassleitung (34), eine Flüssigkeitsauslassleitung (36) und, zwischen der Einlassleitung und der Auslassleitung, eine Stromabfangkammer (38) bildet;
- eine Stromabfanggruppe (40), die dichtend in der Stromabfangkammer (38) aufgenommen wird und die zum Abfangen des Durchtritts des Flüssigkeitsstroms von der Einlassleitung (34) zu der Auslassleitung (36) betätigt werden kann;
- mindestens eine Dichtungsanordnung (20) nach Anspruch 6 aufweisend die Lippendichtung (10), die zwischen einer Oberfläche der Abfanggruppe und einer Oberfläche des Vorrichtungskörpers (32) angeordnet ist

10. Vorrichtung nach dem vorhergehenden Anspruch, wobei das Einstellelement (16) durch einen Gewindeeinstellring (162) gebildet wird, der in einen Gewinderingsitz (164) eingeschraubt wird, der in dem Vorrichtungskörper (32) erhalten wird.

11. Vorrichtung nach Anspruch 9 oder 10, wobei die Abfanggruppe (40) umfasst:
- ein bewegliches Verschlusselement (402);
- ein Paar ringförmiger Sitze (404), die das bewegliche Verschlusselement (402) dichtend tragen;
- ein Paar Sitz-Körper-Dichtungsanordnungen, jede aufweisend eine Lippendichtung (10), die zwischen einem jeweiligen ringförmigen Sitz (404) und einer Oberfläche des Vorrichtungskörpers (32) angeordnet ist.

12. Vorrichtung nach einem der Ansprüche 9 bis 11, wobei die Abfanggruppe (40) mittels eines Betätigungsschafts (408), der aus der Abfangkammer vorsteht, drehbar betätigt werden kann, um von einem Steuergriff drehbar in Eingriff gesetzt zu werden, wobei mindestens eine Körper-Schaft-Dichtungsanordnung zwischen einer Oberfläche des Betätigungsschafts (408) und einer Oberfläche des Vorrichtungskörpers (32) angeordnet ist.

13. Vorrichtung nach einem der Ansprüche 9 bis 12, wobei der Vorrichtungskörper (32) einen Zentralabschnitt (32a), zwei Endflansche (32b), die mit dem Zentralabschnitt (32a) verbunden sind, und einen Deckel (32c), der an dem Zentralabschnitt (32a) befestigt wird, zum Tragen und Führen eines Betätigungselements der Abfanggruppe (40) umfasst, wobei mindestens eine Dichtungsanordnung (20) zwischen jedem Endflansch (32b) und dem zentralen Körper (32a) und/oder zwischen jedem Endflansch (32b) und dem Deckel (32c) und/oder zwischen dem Deckel (32c) und dem zentralen Körper (32a) angeordnet ist.

14. Vorrichtung nach einem der Ansprüche 11 bis 13, wobei die Abfanggruppe (40) einen Kugelverschluss (402) umfasst und wobei jeder ringförmige Sitz (404) des Paars ringförmiger Sitze (404) elastisch in Kontakt mit dem Kugelverschluss (402) durch einen Sitzpressring (50) gehalten wird, wobei der Sitzpressring (50) in dem Vorrichtungskörper (32) positioniert ist, um als ein axiales Auflageelement für das Körper-Sitz-Dichtungssystem auf der gegenüberliegenden Seite in Bezug auf den Einstellring zu wirken.

## Revendications

1. Système d'étanchéité (1), comprenant :
- un joint à lèvre (10) comprenant une portion de lèvre interne (102) et une portion de lèvre externe (104) ;
- un élément de tension toroïdal (12) positionné entre la portion de lèvre interne (102) et la portion de lèvre externe (104) pour maintenir le joint à lèvre (10) sous tension ;
- un élément poussoir annulaire (14) partiellement inséré dans le joint à lèvre (10) entre ladite portion de lèvre interne (102) et l'élément de tension toroïdal (12), l'élément poussoir annulaire (14) formant une portion d'extrémité externe (142) faisant saillie axialement du joint à lèvre (10) afin de pouvoir être engagée de manière à provoquer une translation axiale de l'élément poussoir annulaire (14) vers l'intérieur du joint à lèvre (10), l'élément poussoir annulaire (14) présentant une forme en coin de sorte que ladite translation axiale de l'élément poussoir annulaire (14) provoque une divarication radiale du joint à lèvre (10),
**caractérisé en ce que** la translation axiale de l'élément poussoir annulaire (14) entraîne un élargissement radial de l'élément de tension toroïdal (12), et par conséquent une augmentation de la charge que l'élément de tension toroïdal (12) transfère au joint à lèvre (10).

2. Système d'étanchéité selon la revendication 1, dans lequel l'élément de tension toroïdal (12) est réalisé avec un ressort hélicoïdal.

3. Système d'étanchéité selon la revendication 1 ou 2, dans lequel une portion d'extrémité distale (104") de l'une parmi la portion de lèvre interne et la portion de lèvre externe (102, 104) présente une forme concave, et dans lequel l'élément de tension toroïdal (12) est partiellement logé par couplage de forme dans ladite portion d'extrémité distale (102", 104").

4. Système d'étanchéité selon l'une quelconque des revendications précédentes, dans lequel l'élément poussoir annulaire (14) forme une paroi radialement externe (144) qui est sensiblement plane, sur laquelle l'élément de tension toroïdal repose, et une paroi radialement interne (146) qui est au moins partiellement inclinée.

5. Système d'étanchéité selon l'une quelconque des revendications précédentes, dans lequel les portions de lèvre interne et externe (102, 104) forment, sur les côtés radialement externes respectifs, des surfaces distales convexes (102', 104') aptes à former des points de contact respectifs avec des surfaces d'étanchéité respectives.

6. Ensemble d'étanchéité (20) comprenant un système d'étanchéité (1) selon l'une quelconque des revendications précédentes et un organe de réglage (16) apte à engager la portion d'extrémité externe (142) de l'élément poussoir annulaire (14), l'organe de réglage (16) étant actionnable pour provoquer une translation contrôlée de l'élément poussoir annulaire (14).

7. Dispositif (30) destiné à contenir un fluide ou à intercepter un flux de fluide, comprenant une première surface et une seconde surface et un ensemble d'étanchéité (20) selon la revendication 6 ayant le joint à lèvre (10) interposé entre ladite première et ladite seconde surface pour empêcher le passage du fluide entre celles-ci.

8. Dispositif selon la revendication précédente, dans lequel l'organe de réglage (16) est formé par une bague de réglage filetée (162) vissée dans un logement de bague fileté (164).

9. Dispositif d'interception (30) destiné à intercepter le flux d'un fluide, comprenant:
- un corps de dispositif (32) formant un conduit d'entrée de fluide (34), un conduit de sortie de fluide (36) et, entre le conduit d'entrée et le conduit de sortie, une chambre d'interception de flux (38) ;
- un groupe d'interception de flux (40) logé de manière étanche dans la chambre d'interception de flux (38) et actionnable pour intercepter le passage du flux de fluide du conduit d'entrée (34) vers le conduit de sortie (36) ;
- au moins un ensemble d'étanchéité (20) selon la revendication 6 ayant le joint à lèvre (10) interposé entre une surface du groupe d'interception et une surface du corps de dispositif (32)

10. Dispositif selon la revendication précédente, dans lequel l'organe de réglage (16) est formé par une bague de réglage filetée (162) vissée dans un logement de bague fileté (164) obtenu dans le corps de dispositif (32).

11. Dispositif selon la revendication 9 ou 10, dans lequel le groupe d'interception (40) comprend :
- un organe obturateur mobile (402) ;
- une paire de sièges annulaires (404) supportant de manière étanche l'organe obturateur mobile (402) ;
- une paire d'ensembles d'étanchéité siège-corps, chacun ayant un joint à lèvre (10) interposé entre un siège annulaire respectif (404) et une surface du corps de dispositif (32).

12. Dispositif selon l'une quelconque des revendications 9 à 11, dans lequel le groupe d'interception (40) est actionnable en rotation au moyen d'une tige de manœuvre (408) faisant saillie depuis la chambre d'interception de manière à pouvoir être engagée en rotation par une poignée de commande, au moins un ensemble d'étanchéité corps-tige étant interposé entre une surface de la tige de manœuvre (408) et une surface du corps de dispositif (32).

13. Dispositif selon l'une quelconque des revendications 9 à 12, dans lequel le corps de dispositif (32) comprend une portion centrale (32a), deux brides d'extrémité (32b) reliées à la portion centrale (32a), et un couvercle (32c) fixé à la portion centrale (32a) pour supporter et guider un organe de manœuvre du groupe d'interception (40), dans lequel au moins un ensemble d'étanchéité (20) est interposé entre chaque bride d'extrémité (32b) et le corps central (32a) et/ou entre chaque bride d'extrémité (32b) et le couvercle (32c) et/ou entre le couvercle (32c) et le corps central (32a).

14. Dispositif selon l'une quelconque des revendications 11 à 13, dans lequel le groupe d'interception (40) comprend un obturateur à bille (402) et dans lequel chaque siège annulaire (404) de la paire de sièges annulaires (404) est maintenu élastiquement en contact avec l'obturateur à bille (402) par une bague de pression de siège (50), la bague de pression de siège (50) étant positionnée dans le corps de dispositif (32) de manière à agir comme élément de butée axiale pour le système d'étanchéité corps-siège du côté opposé par rapport à la bague de réglage.
